# EUROPÄISCHE PATENTANMELDUNG

(11) **EP 3 981 551 A1**
(43) Veröffentlichungstag der Anmeldung: **13.04.2022**
(21) Anmeldenummer: 20200968.4
(22) Anmeldetag: 09.10.2020
(51) Int. Cl.: B25H 3/00, B25J 5/00, B25J 11/00, B25H 1/00, B25H 3/02

(54) **BAUSTELLENBOX**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(57) **Zusammenfassung**

Die Erfindung betrifft eine Baustellenbox (10) zur Bereitstellung von Werkzeugen (90), Werkzeugmaschinen (26, 88), Werkzeugmaschinenteilen und / oder Verbrauchsmaterialien auf einer Baustelle, insbesondere auf einer Hochbau- oder auf einer Tiefbaubaustelle. Die Baustellenbox (10) umfasst wenigstens eine Aufnahme (57, 58, 60, 64, 66, 74, 84, 86) zur Aufnahme eines Werkzeugs (90), einer Werkzeugmaschine (26, 88), eines Werkzeugmaschinenteils und / oder eines Verbrauchsmaterials, eine mobile Fortbewegungsplattform (14) zur Fortbewegung der Baustellenbox (10) und einen Motor (20) zum Antrieb der Fortbewegungsplattform (14) und ermöglicht einem Benutzer der Baustellenbox (10) ein besonders effizientes und gesundheitsschonendes Arbeiten auf einer Baustelle.

## Beschreibung

Die Erfindung geht aus von einer Baustellenbox zur Bereitstellung von Werkzeugen, Werkzeugmaschinen, Werkzeugmaschinenteilen und / oder Verbrauchsmaterialien auf einer Baustelle, insbesondere auf einer Hochbau- oder auf einer Tiefbaubaustelle.

Eine solche Baustellenbox ist beispielsweise aus der US-amerikanischen Patentanmeldung US 2019 / 0154792 A1, Figur 3, bekannt.

Aufgabe der vorliegenden Erfindung ist es, eine gattungsgemäße Baustellenbox anzubieten, die einem Benutzer der Baustellenbox ein besonders effizientes Arbeiten auf einer Baustelle ermöglicht.

Gelöst wird die Aufgabe durch eine Baustellenbox zur Bereitstellung von Werkzeugen, Werkzeugmaschinen, Werkzeugmaschinenteilen und / oder Verbrauchsmaterialien auf einer Baustelle, insbesondere auf einer Hochbau- oder auf einer Tiefbaubaustelle, umfassend wenigstens eine Aufnahme zur Aufnahme eines Werkzeugs, einer Werkzeugmaschine, eines Werkzeugmaschinenteils und / oder eines Verbrauchsmaterials, eine mobile Fortbewegungsplattform zur Fortbewegung der Baustellenbox und einen Motor zum Antrieb der Fortbewegungsplattform.

Erfindungsgemäß kann die Baustellenbox somit mittels der mobilen Fortbewegungsplattform und dem Motor auf besonders einfache Weise an eine jeweilige Arbeitsstelle eines Benutzers der Baustellenbox gebracht werden. Insbesondere kann sich die Baustellenbox dazu motorisch angetrieben fortbewegen.

Somit kann die Baustellenbox besonders einfach und schnell in eine Reichweite des Benutzers gebracht werden, sodass dieser mühelos notwendige Werkzeugmaschinen, Werkzeugmaschinenteile und / oder Werkzeuge ohne Zeitverlust oder nur mit äußerst geringem Zeitverlust wechseln und / oder sich benötigtes Verbrauchsmaterial beschaffen kann, wodurch dem Benutzer ein besonders effizientes Arbeiten auf der Baustelle ermöglicht wird.

Die Aufnahme kann als Fach oder als Ablage ausgebildet sein. Vorzugsweise weist die Baustellenbox mehr als eine Aufnahme auf. Erfahrungsgemäß bestehen zu erledigende Tätigkeiten auf Baustellen häufig aus wenigstens zwei Aufgaben. Beispielsweise erfordert eine Montage eines Schraubankers in einer Decke in der Regel die Aufgabe, ein Bohrloch zu bohren, sowie die Aufgabe, den Schraubanker in das Bohrloch zu schrauben. Besonders bevorzugt weist die Baustellenbox daher wenigstens drei Ablagen auf, wobei wenigstens eine Werkzeugmaschine und wenigstens zwei Werkzeuge, beispielsweise ein Bohrer und ein Schraubbit, bereitgestellt werden können.

Die wenigstens eine Aufnahme kann zur Aufnahme von Werkzeugmaschinenteilen wie beispielsweise Akkumulatoren eingerichtet sein. Werkzeuge, insbesondere für Werkzeugmaschinen, beispielsweise Bohrer, Meißel oder Sägeblätter sowie Verbrauchsmaterialien wie Anker, Dübel oder dergleichen können ebenfalls in wenigstens einer der Aufnahmen aufnehmbar sein. Auch ist denkbar, dass die Baustellenbox eine Aufnahme zur Aufnahme eines Messgerätes und / oder eines Messutensils umfasst.

Die Fortbewegungsplattform kann als Kettenfahrwerk ausgebildet sein und / oder ein solches umfassen. Alternativ oder ergänzend kann die Fortbewegungsplattform auch ein Radfahrwerk oder ein mobiles, mehrbeiniges Gestell sein und / oder ein solches umfassen. Somit wird eine sichere Fortbewegung innerhalb einer Baustelle ermöglicht. Selbst bei Unebenheiten, wie sie regelmäßig auf einer Baustelle zu erwarten sind, kann die Baustellenbox fortbewegt werden.

Bei einer besonders bevorzugten Klasse von Ausführungsformen der Baustellenbox ist die Fortbewegungsplattform fernsteuerbar, teilautonom und / oder autonom fortbewegbar ausgebildet. Dazu kann sie eine Fernsteuerung, beispielsweise eine drahtlose Fernsteuerung wie beispielsweise eine Funkfernsteuerung, eine Infrarot- und / oder eine WLAN-Fernsteuerung, oder eine sonstige drahtlose oder drahtgebundene Fernsteuerung umfassen.

Unter einer sich autonom fortbewegbaren Fortbewegungsplattform kann eine Fortbewegungsplattform verstanden werden, die sich, ohne dass es einer Bewegungssteuerung und / oder Aufsicht durch den Benutzer bedarf, innerhalb der Baustelle ohne an andere Objekte oder Personen anzustoßen zu einem Zielort bewegen kann. Sie kann insbesondere eingerichtet sein, den Zielort, den Zeitpunkt des Starts der Bewegung und / oder ihren Bewegungspfad zum Zielort selbsttätig zu wählen. Unter einer teilautonom fortbewegbaren Fortbewegungsplattform kann eine Fortbewegungsplattform verstanden werden, die sich innerhalb der Baustelle, insbesondere ohne an andere Objekte oder Personen anzustoßen, bewegen kann, aber zumindest einer eingeschränkten Bewegungssteuerung und / oder Aufsicht durch einen Benutzer, beispielsweise in Form einer Überwachung und bedarfsweisen Bremsung oder In-Gang-Setzung durch den Benutzer, bedarf.

Denkbar ist auch, dass die Baustellenbox zur automatischen Nachverfolgung des Benutzers eingerichtet ist. Insbesondere kann die Baustellenbox in einem Nachverfolgungs-Betriebsmodus betreibbar sein. Dazu kann sie eingerichtet sein, sich selbsttätig in die Nähe des Benutzers zu begeben, selbst wenn sich der Benutzer an eine andere Stelle auf der Baustelle begibt. In der Baustellenbox aufgenommene Elemente können somit dem Benutzer stets griffbereit zur Verfügung stehen.

Denkbar ist auch, dass die Baustellenbox wenigstens einen, insbesondere wiederaufladbaren, Energiespeicher aufweist. Vorzugsweise handelt es sich um einen elektrischen Energiespeicher. Der Energiespeicher kann beispielsweise ein Lithium-basierter Akkumulator sein. Der Energiespeicher kann zur Eigenversorgung und / oder zur Versorgung weiterer Geräte eingerichtet sein. Er kann derart dimensioniert sein, dass ein unterbrechungsfreier Betrieb der Baustellenbox, vorzugsweise einschließlich daran angeschlossener externer Geräte, über einen Zeitraum von mindestens 3 h, besonders bevorzugt von mindestens 6 h, möglich ist.

Besonders bevorzugt weist die Baustellenbox einen Stromanschluss zum Anschluss externer Geräte, beispielsweise Handwerkzeugmaschinen wie Bohrmaschinen, Meißelmaschinen oder Bohrhammermaschinen, auf. Zur Energieversorgung dieser externen Geräte ist somit kein Netzanschluss an ein örtliches Stromnetz mehr erforderlich.

Weist die Baustellenbox wenigstens eine Ladestation zur Aufladung eines externen Energiespeichers, beispielsweise eines Akkumulators einer kabellos betreibbaren Handwerkzeugmaschine oder dergleichen, auf, können ein Ersatzakkumulator und der Akkumulator abwechselnd mit der Handwerkzeugmaschine genutzt werden, während der jeweils andere Akkumulator in der Baustellenbox aufgeladen wird. Somit kann die Handwerkzeugmaschine nahezu unterbrechungsfrei, selbst über längere Zeit hinweg, auf der Baustelle genutzt werden.

Vorzugsweise weist die Baustellenbox wenigstens eine Rechnereinheit und / oder eine Anzeigeeinheit auf. Die Rechnereinheit kann ein Standrechner und / oder eine tragbare Rechnereinheit sein. Die Anzeigeeinheit kann ein Monitor und / oder eine tragbare Anzeigeeinheit sein. Beispielsweise kann die Anzeigeeinheit Teil der tragbaren Rechnereinheit, beispielsweise eines Tabletcomputers, sein. Denkbar ist insbesondere, dass die Baustellenbox mehrere Rechnereinheiten und / oder mehrere Anzeigeeinheiten aufweist.

Die Baustellenbox kann als Kommunikationszentrale eingerichtet sein. Dazu kann sie wenigstens eine drahtlose Kommunikationsschnittstelle aufweisen. Die drahtlose Kommunikationsschnittstelle kann beispielsweise eine WLAN-, eine Mobilfunk- und / oder eine Bluetooth-Schnittstelle und / oder eine sonstige drahtlose Schnittstelle umfassen. Besonders bevorzugt weist die drahtlose Kommunikationsschnittstelle einen Router auf und / oder ist als Router betreibbar. Sie kann insbesondere zur Kommunikation mit einer Cloud-basierten Rechnereinheit eingerichtet sein.

Um dem Benutzer der Baustellenbox unmittelbaren Zugriff auf der Baustelle zugehörige Planungsdaten zu ermöglichen, ist es vorteilhaft, wenn die Baustellenbox eingerichtet ist, Building Information Modeling (BIM)-Daten über die Kommunikationsschnittstelle zu empfangen, zu speichern und / oder über die Kommunikationsschnittstelle bereitzustellen. Dazu kann die Kommunikationsschnittstelle eingerichtet sein, eine Kommunikationsverbindung mit einem entfernten Rechnersystem, insbesondere einer Rechner-Cloud, zum Datenaustausch aufzubauen.

Auch kann die Baustellenbox wenigstens eine Positions- und / oder Lageerkennungseinheit aufweisen.

Somit kann in Verbindung mit den BIM-Daten dem Benutzer auf der Anzeigeeinheit dargestellt werden, welche Aufgaben im Bereich der Stelle, an der er und / oder die Baustellenbox sich jeweils befinden, auszuführen sind.

Ein besonders weiter Bereich von Aufgaben kann mittels der Baustellenbox effizient erledigt werden, wenn die Baustellenbox wenigstens einen steuerbaren Manipulator aufweist. Der Manipulator kann dadurch auch zur Schonung der Gesundheit des Benutzers beitragen. Der Manipulator kann für Arbeiten an Decken, Wänden und / oder Böden, allgemein an für den Benutzer schwer zugänglichen Stellen, ausgebildet sein. Dazu kann er über wenigstens zwei, bevorzugt wenigstens vier, steuerbare Achsen verfügen. Vorzugsweise ist der Manipulator durch den Energiespeicher mit Energie versorgbar.

Der steuerbare Manipulator weist vorzugsweise an seinem freien Ende einen Endeffektor auf. Der Endeffektor kann mit einem Vibrationsdämpfer ausgestattet sein. Der Vibrationsdämpfer kann eingerichtet sein, am Endeffektor entstehende Vibrationen, beispielsweise durch eine am Endeffektor angeordnete Werkzeugmaschine, vom übrigen steuerbaren Manipulator abzukoppeln. Somit lassen sich Verschleißerscheinungen am steuerbaren Manipulator reduzieren oder gänzlich vermeiden.

Bevorzugt ist der Manipulator mittels der Rechnereinheit steuerbar. Der Manipulator kann, vergleichbar mit der Fortbewegungsplattform, teilautonom oder autonom arbeitend ausgebildet sein. Denkbar ist, dass der Manipulator anhand der BIM-Daten steuerbar ist.

Der Manipulator kann eingerichtet sein, eine oder mehrere Aufgaben in Abhängigkeit seiner Position und / oder seiner Lage, insbesondere detektiert durch die Position- und / oder Lageerkennungseinheit, und / oder in Abhängigkeit der gespeicherten BIM-Daten auszuführen. Die Aufgabe kann beispielsweise im Bohren eines oder mehrerer Bohrlöcher bestehen.

Da erfahrungsgemäß auf einer Baustelle an einer Stelle regelmäßig mehrere Aufgaben zu erledigen sind, besteht somit die Möglichkeit, dass der Manipulator, beispielsweise in Abhängigkeit der am Endeffektor zur Verfügung stehenden Werkzeuge, einen Teil der Aufgaben übernimmt, während der Benutzer einen anderen Teil der Aufgaben manuell unter Zuhilfenahme der in der Baustellenbox mitgeführten weiteren Werkzeugmaschinen, Werkzeuge und / oder Verbrauchsmaterialien erledigt. So kann der Manipulator ein oder mehrere Bohrlöcher an einer Decke autonom, d. h. selbsttätig, bohren. Anschließend kann der Benutzer ein, beispielsweise großflächiges, Deckelement mithilfe mehrerer, in der Baustellenbox lagernder, Anker sowie mithilfe eines in der Baustellenbox aufgenommenen Akkuschraubers an der Decke montieren. Ein für den Akkuschrauber benötigter Akkumulator kann dazu zuvor mittels der Ladestation aufgeladen worden sein.

Vorteilhaft ist dabei, dass alle benötigten Geräte und Teile direkt vor Ort und Stelle in Reichweite des Benutzers sind. Auch können sonst erforderliche Nebentätigkeiten, beispielsweise um eine Maschine, eine herkömmliche Baustellenbox o. ä. wegzuräumen, um überhaupt an die Arbeitsstelle zu gelangen, entfallen. Auch hierdurch ergibt sich eine Effizienzsteigerung.

Um einen Arbeitsbereich des Manipulators zu vergrößern, kann die Baustellenbox auch eine Hubvorrichtung aufweisen. Die Hubvorrichtung kann eingerichtet sein, den Manipulator entlang einer Vertikalen zu verlagern, insbesondere um eine Höhenlage des Manipulators einzustellen.

Zur Verbesserung der Sicherheit des Benutzers können Bewegungen der Baustellenbox, des Manipulators und / oder der Hubvorrichtung in Abhängigkeit von einer Lage und / oder einer Neigung der Baustellenbox, des Manipulators und / oder der Hubvorrichtung begrenzbar sein. Zum Beispiel kann der Betrieb des Manipulators bei einer Neigung der Baustellenbox um mehr als 15° gegen die Vertikale gesperrt sein.

Vorzugsweise ist der Manipulator als kollaborativer Manipulationsarm ausgelegt. Dazu können entlang des Manipulators Berührungssensoren angeordnet sein, durch die die Bewegung des Manipulators gestoppt wird, sobald ein unerwünschter Kontakt des Manipulators mit einem Umgebungsobjekt oder einer Person, beispielsweise dem Benutzer, detektiert wird. Alternativ oder ergänzend kann eine solche Funktionalität auch durch eine im Manipulator verbaute Sensorik in Verbindung mit einer geeignet ausgebildeten Steuereinheit realisiert werden. Denkbar ist auch, dass der Manipulator als xy, z- oder xyz-Manipulationseinheit ausgebildet ist. Beispielweise kann der Manipulator als vertikal und / oder horizontal verstellbare Bohrmaschinenführungseinheit ausgebildet sein.

Der Arbeitsbereich, in dem beispielsweise mit einer am Endeffektor angeordneten Werkzeugmaschine eine Aufgabe ausgeführt wird, kann überwacht werden, wenn die Baustellenbox wenigstens ein optisches Aufnahmegerät, beispielsweise eine Time-Of-Flight-Kamera, aufweist. Das optische Aufnahmegerät kann eingerichtet sein, ein dreidimensionales Bild des Arbeitsbereichs und / oder seiner Umgebung aufzunehmen. Die Rechnereinheit kann eingerichtet sein, das durch das optische Aufnahmegerät aufgenommene Bild zu verarbeiten. Die Anzeigeeinheit kann eingerichtet sein, das aufgenommene Bild und / oder ein verarbeitetes Ergebnis darzustellen.

Ein sauberes Arbeitsergebnis lässt sich einfach und dadurch effizient erreichen, indem die Baustellenbox eine Saugvorrichtung aufweist. Sie kann auch eine Ausblasvorrichtung aufweisen, beispielsweise zur Reinigung eines Bohrlochs. Die Saugvorrichtung und die Ausblasvorrichtung können in einem Gerät zusammengefasst ausgebildet sein.

Die Saugvorrichtung und / oder die Ausblasvorrichtung können ebenfalls durch den Energiespeicher mit Energie versorgbar sein.

Eine Saugleitung kann am Manipulator angeordnet sein. Die Saugleitung kann mit der Saugvorrichtung und / oder mit der Ausblasvorrichtung verbindbar oder verbunden sein. Am Endeffektor oder an einer am Endeffektor angeordneten Werkzeugmaschine kann ein Absaugadapter angeordnet sein. Vorzugsweise ist der Absaugadapter mit der Saugleitung verbunden oder zumindest verbindbar. Die Saugleitung wiederum kann an ihrem anderen Ende mit der Saugvorrichtung verbunden oder zumindest koppelbar sein. Somit kann Staub aus dem Bereich der im Endeffektor aufgenommenen Werkzeugmaschine absaugbar und über die Saugleitung zur Saugvorrichtung leitbar sein.

Die Saugvorrichtung und / oder die Ausblasvorrichtung können auch aus der Baustellenbox entnehmbar ausgebildet sein. Auch für diese kann eine Aufnahme innerhalb der Baustellenbox vorgesehen sein.

Bei einer Klasse von Ausführungsform der Erfindung weist die Baustellenbox wenigstens einen Kompressor, einen Farbbehälter und / oder eine Sprühdüse auf. Die Sprühdüse kann vorzugsweise im Bereich des Endeffektors angeordnet sein. Sie kann dann zur Markierung von Arbeitsstellen oder zur Differenzierung und / oder Gruppierung der Arbeitsstellen, beispielsweise von hergestellten Bohrlöchern, dienen. Dazu kann mittels der Sprühdüse in Verbindung mit dem Kompressor und dem Farbbehälter Farbe beispielsweise an die Arbeitsstelle sprühbar sein.

Der Kompressor kann ein Druckluftkompressor sein. Die Druckluft kann an den Manipulator leitbar sein. Dazu kann ein Druckluftschlauch entlang des Manipulators verlaufen. Dann kann die am Endeffektor angeordnete Werkzeugmaschine eingerichtet sein, pneumatisch betätigt zu werden. Dies ermöglicht es, handelsübliche, nicht speziell für einen Betrieb an einem Manipulator eingerichtete Werkzeugmaschinen, beispielsweise Handwerkzeugmaschinen, mit dem Manipulator zu verwenden.

Somit kann der Benutzer auf einfache Weise auch eine Handwerkzeugmaschine in einem Bereich benutzen, den er nicht ohne weiteres, insbesondere nicht ohne weiteres Hilfsmittel, alternativ erreichen könnte. Beispielsweise werden Arbeiten mit der Handwerkzeugmaschine an einer Decke wesentlich erleichtert.

Ist die Baustellenbox, insbesondere die Fortbewegungsplattform und / oder der Manipulator, durch wenigstens ein akustisches und / oder ein optisches Signal, beispielsweise ein Sprachkommando oder eine optisch detektierbare Geste des Benutzers, steuerbar, so kann der Benutzer die Baustellenbox steuern, beispielsweise den Manipulators bewegen und / oder ihm eine Aufgabe erteilen und / oder die Baustellenbox fortbewegen, ohne seine aktuelle Tätigkeit unterbrechen zu müssen.

Beispielsweise ermöglicht dies dem Benutzer, ein Deckenelement oder dergleichen mit beiden Händen auf Position zu halten, und die Baustellenbox, insbesondere den Manipulator per Sprachkommando und / oder per Geste zu veranlassen, Arbeiten an dem vom Benutzer gehaltenen bzw. vorpositionierten Deckenelement auszuführen. Beispielsweise kann der Manipulator ein oder mehrere Bohrlöcher in das Deckenelement bohren und / oder ein oder mehrere Anker, beispielsweise Schrauben, in das Deckenelement bzw. durch das Deckenelement hindurch zu stecken und an einer Decke zu verschrauben.

Denkbar ist auch, dass die Baustellenbox zur Detektion des Ausgangspunkts des akustischen und / oder optischen Signals eingerichtet ist. Somit kann die Baustellenbox eingerichtet sein, sich in die Nähe des Benutzers zu bewegen, sobald dieser die Baustellenbox ruft oder ein entsprechendes Zeichen gibt.

Weiter ist denkbar, dass die Baustellenbox eine Kollisionsvermeidungseinheit aufweist. Dazu kann sie wenigstens einen Abstandssensor aufweisen. Der Abstandssensor kann eingerichtet sein zu detektieren, ob sich die Baustellenbox in eine Nähe eines Objekts manövriert. Die Baustellenbox kann für diesen Fall eingerichtet sein, zu stoppen und / oder einen geplanten weiteren Bewegungspfad abzuändern.

Auch ist denkbar, dass die Baustellenbox ein Gehäuse aufweist. Das Gehäuse kann verriegelbar, beispielsweise abschließbar, sein. Somit können wertvolle Gegenstände, die in den Aufnahmen der Baustellenbox aufgenommen sind, vor Diebstahl oder dergleichen geschützt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- **Fig. 1**: eine Seitenansicht einer Baustellenbox sowie Ansichten von weiteren Einzelteilen der Baustellenbox;
- **Fig. 2**: eine Ladestation der Baustellenbox;
- **Fig. 3**: einen seitlichen Stauraum der Baustellenbox;
- **Fig. 4**: einen Steuerraum der Baustellenbox und
- **Fig. 5**: einen weiteren Stauraum der Baustellenbox.

In der nachfolgenden Beschreibung der Figuren werden zur Erleichterung des Verständnisses der Erfindung für gleiche oder sich funktional entsprechende Elemente jeweils die gleichen Bezugszeichen verwendet.

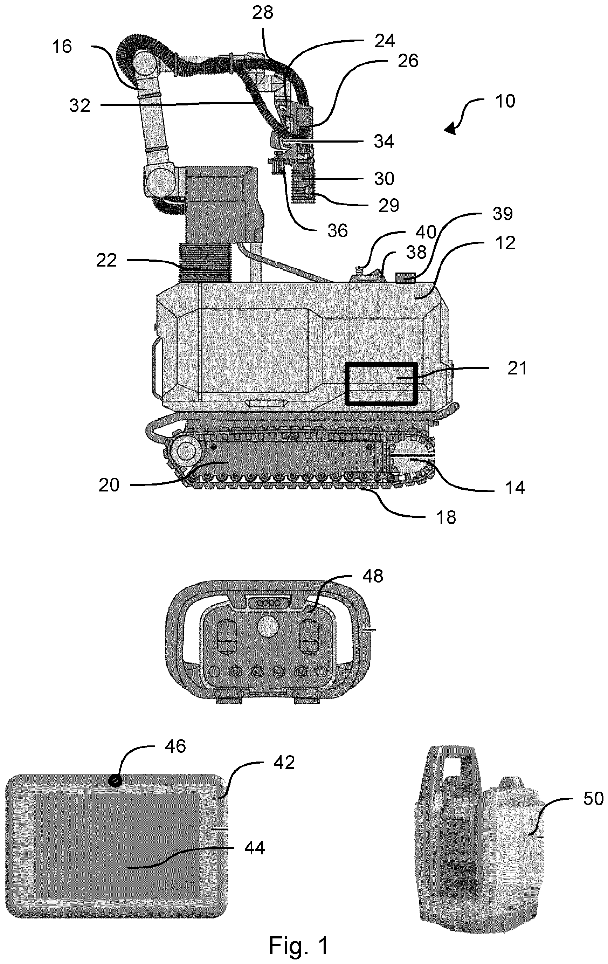

**Fig. 1** zeigt eine Seitenansicht einer Baustellenbox **10.** Die Baustellenbox 10 ist, wie im Folgenden noch näher erläutert wird, zur Bereitstellung von Werkzeugen, Werkzeugmaschinen, Werkzeugmaschinenteilen sowie Verbrauchsmaterialien auf einer Baustelle, beispielsweise auf einer Hochbau- oder auf einer Tiefbaubaustelle, eingerichtet.

Die Baustellenbox 10 umfasst ein Gehäuse **12,** an dem unterseitig eine mobile Fortbewegungsplattform **14** angeordnet ist. Oberseitig des Gehäuses 12 befindet sich ein Manipulator **16.**

Die mobile Fortbewegungsplattform 14 ist als Kettenfahrwerk ausgebildet. Dazu sind zwei Ketten, von denen in der Seitenansicht gemäß Fig. 1 lediglich ein Kette **18** erkennbar ist, durch einen Motor **20** zum Antrieb der Fortbewegungsplattform 14 antreibbar.

Der Motor 20 ist durch einen als Lithium-basierter Akkumulator ausgebildeten Energiespeicher **21** mit elektrischer Energie versorgbar. Der Energiespeicher 21 ist innerhalb des Gehäuses 12 angeordnet und daher in Fig. 1 lediglich schematisch dargestellt.

Der Manipulators 16 ist über eine Hubvorrichtung **22** am Gehäuse 12 angeordnet. Die Hubvorrichtung 22 ist eingerichtet, eine Höhenlage des Manipulators 16 einzustellen und dadurch die maximale Reichweite des Manipulators 16 zu vergrößern.

Am freien Ende des Manipulators 16 ist ein Endeffektor **24** ausgebildet. Am Endeffektor 24 ist über eine Werkzeugmaschinenaufnahme eine Werkzeugmaschine **26,** in diesem Fall eine als Bohrmaschine ausgebildete elektrische Handwerkzeugmaschine, angeordnet.

Über eine Saugleitung **28** in Verbindung mit einem Saugadapter **30** kann Staub, Bohrmehl oder dergleichen aus dem Arbeitsbereich der Werkzeugmaschine 26 abgesaugt werden.

Am Endeffektor 24 ist ferner eine Markiereinheit angeordnet, insbesondere in Form einer Sprühdüse **29,** mit der Farbe, beispielsweise zur Erstellung von farblichen Markierungen, versprühbar ist.

Seitlich zu der Werkzeugmaschine 26 ist ein optisches Aufnahmegerät **34** angeordnet. Das optische Aufnahmegerät 34 weist eine Time-Of-Flight-Kamera auf, sodass ein dreidimensionales Bild des Arbeitsbereichs der Werkzeugmaschine 26 sowie dessen Umgebung erfassbar ist.

Weiter ist im Bereich des Endeffektors 24 eine Positionsmarke **36** angeordnet. Die Positionsmarke 36 ist in Form einer polyedrischen Spiegelfläche ausgebildet, um mit einer im Folgenden noch näher beschriebenen Positions- und Lageerkennungseinheit zusammenzuwirken.

An der Oberseite des Gehäuses 12 ist ferner eine Ladestandsanzeigeeinheit **38** zur Anzeige der verfügbaren Restenergie des Energiespeichers 21 angeordnet.

Neben der Ladestandsanzeigeeinheit 38 ist ein Not-Aus-Schalter 40 vorgesehen, mit dem die Baustellenbox 10 sowie gegebenenfalls angeschlossene Geräte im Bedarfsfall kurzfristig abschaltbar sind.

Weiter ist eine Dockingstation **39** am Gehäuse 12 angeordnet, die ausgebildet ist, einen Tabletcomputer **42** aufzunehmen. Der Tabletcomputer 42 ist in Fig. 1 als eines von mehreren Einzelteilen in einer separaten Frontansicht dargestellt. Er weist insbesondere eine Rechnereinheit auf, mit der eine Anzeigeeinheit **44** ansteuerbar ist. Weiter ist der Tabletcomputer 42 unter anderem mit einem Mikrofon **46** zur Aufzeichnung von Sprachsignalen oder dergleichen ausgestattet.

Im unteren Bereich von Fig. 1 ist ferner eine Funkfernsteuerung **48** zu erkennen, mit der die Fortbewegungsplattform 14 fernsteuerbar ist. Sie bietet die Möglichkeit, jede der Ketten 18 unabhängig voneinander zu steuern, sodass die als Kettenfahrwerk ausgebildete Fortbewegungsplattform 14 vorwärts, rückwärts, nach links, rechts oder, insbesondere durch gegenläufiges Steuern der Ketten 18, auf der Stelle drehend, steuerbar ist.

Fig. 1 zeigt als weiteres Einzelteil der Baustellenbox 10 eine Positions- und Lageerkennungseinheit **50** in Form einer automatischen Totalstation in einer perspektivischen Ansicht von schräg vorne.

Die Positions- und Lageerkennungseinheit 50 ist eingerichtet, mit der Positionsmarke 36 zusammenzuwirken, um sowohl die Position der Baustellenbox 10 als auch ihre relative Lage beziehungsweise Ausrichtung zu einem, beispielsweise durch in der Baustelle verteilt angeordnete Marker, vordefinierten Koordinatensystem zu bestimmen. Da die Positionsmarke 36 im Bereich des Endeffektors 24 angeordnet ist, ist es möglich, sowohl die Position als auch die Ausrichtung bzw. Lage des Endeffektors 24 und damit der darin aufgenommenen Werkzeugmaschine 26 zu bestimmen.

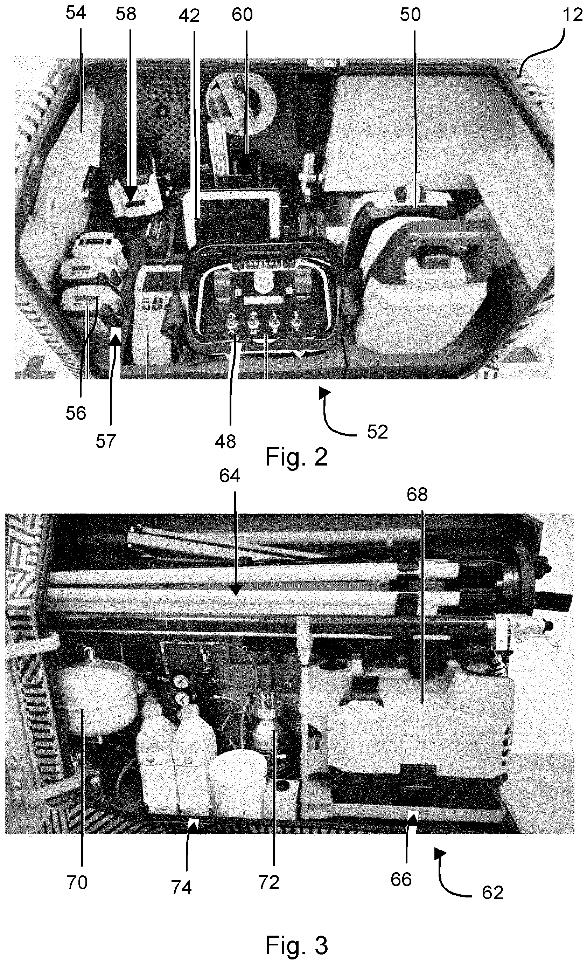

**Fig. 2** zeigt eine Ladestation **52** der Baustellenbox 10 (Fig. 1). Die Ladestation 52 ist in einem hinteren Bereich der Baustellenbox 10 ausgebildet. Die Ladestation 52 befindet sich innerhalb des Gehäuses 12. Um zur Ladestation 52 gelangen zu können, weist das Gehäuse 12 einen aufklappbaren, in Fig. 2 nicht sichtbaren Gehäusedeckel auf.

Die Ladestation 52 weist ein Ladegerät **54** auf, mit dem externe Energiespeicher, insbesondere Akkumulatoren **56,** aufladbar sind. Die Akkumulatoren 56, von denen stellvertretend lediglich einer mit einem Bezugszeichen versehen ist, stellen Ersatzakkumulatoren dar. Sie sind daher bis zu einer etwaigen, späteren Verwendung jeweils in Akkumulator-Aufnahmen **57,** von denen wiederum stellvertretend eine mit einem Bezugszeichen versehen ist, aufbewahrt.

Zur optimierten Raumnutzung sind im Bereich der Ladestation 52 weitere Aufnahmen ausgebildet, beispielsweise eine Linienlaser-Aufnahme **58** sowie eine Distanzmesser-Aufnahme **60**, in die jeweils entsprechend ein Linienlaser sowie ein Distanzmesser aufgenommen sind.

In der Ladestation 52 können ferner der Tabletcomputer 42, die Funkfernsteuerung 48 und die Positions- und Lageerkennungseinheit 50 in entsprechenden Aufnahmen aufbewahrt werden.

**Fig. 3** zeigt ein Seitenfach **62** der Baustellenbox 10 (Fig. 1). Insbesondere ist eine Messutensilien-Aufnahme **64** zu erkennen, in die zur Positions- und Lageerkennungseinheit 50 zugehörige Messutensilien, beispielsweise ein Peilstab zur separaten Bestimmung von Positionen auf einer Baustelle, aufgenommen sind.

In einer Saugvorrichtungsaufnahme **64** ist ferner eine Saugvorrichtung **68** aufgenommen. Die Saugvorrichtung 68 ist der Baustellenbox 10 entnehmbar, sodass sie auch unabhängig von der Baustellenbox 10 nutzbar ist. Sie ist mit der Saugleitung 28 (Fig. 1) verbindbar.

Weiter ist ein als Druckluftkompressor ausgebildeter Kompressor **70** zu erkennen, der in Verbindung mit einem Farbbehälter **72** die Sprühdüse 29 (Fig. 1) mit Farbe versorgt.

Ferner ist eine Verbrauchsmaterial-Aufnahme **74** vorgesehen, in der diverses Service- und / oder Verbrauchsmaterial, beispielsweise Farbe und / oder Verdünner, bevorratbar ist.

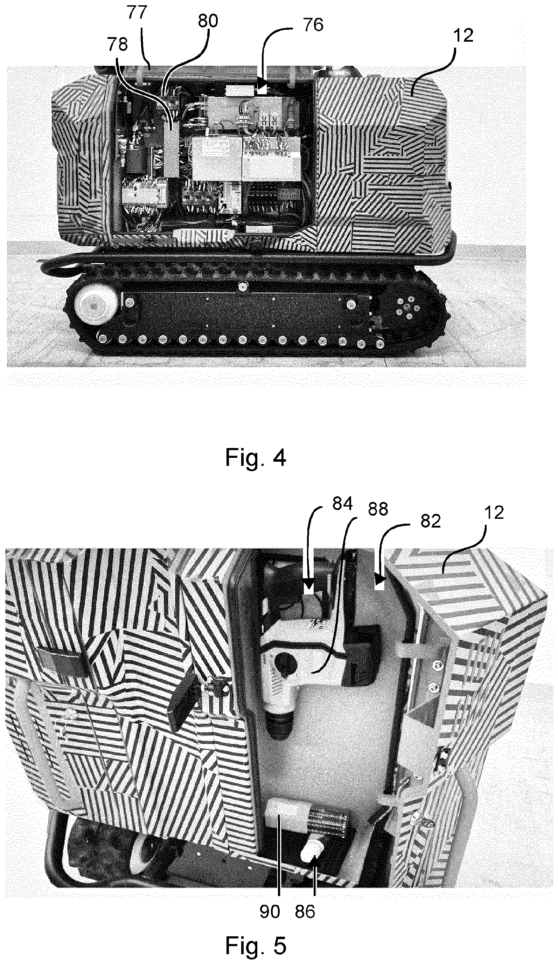

**Fig. 4** zeigt einen Steuerraum **76** der Baustellenbox 10 (Fig. 1), der sich im Inneren des Gehäuses 12 hinter einem in Fig. 4 aufgeklappten und nur teilweise sichtbaren Gehäusedeckel **77** befindet.

Der Steuerraum 76 weist eine in Form eines Standrechners ausgebildete Rechnereinheit **78** auf. Die Rechnereinheit 78 ist mit einer Kommunikationsschnittstelle **80** verbunden. Die Kommunikationsschnittstelle 80 weist einen Mobilfunkempfänger sowie eine WLAN-Schnittstelle auf. Die Kommunikationsschnittstelle 80 ist insbesondere eingerichtet, als Router betrieben zu werden. Dazu ist sie eingerichtet, Daten zwischen Mobilfunkschnittstelle der WLAN-Schnittstelle zu transferieren. Auch ist sie eingerichtet, Netzwerkverbindungen zu dem Tabletcomputer 42 (Fig. 1) sowie gegebenenfalls zu weiteren Geräten, beispielsweise einer weiteren Baustellenbox, herzustellen.

Abschließend zeigt **Fig. 5** ein Seitenfach **82** der Baustellenbox 10, das sich ebenfalls im Inneren des Gehäuses 12 und hinter einem in Fig. 5 nicht sichtbaren, aufklappbaren Gehäusedeckel befindet.

Im Seitenfach 82 ist eine Werkzeugmaschinen-Aufnahme **84** sowie eine Werkzeug-Aufnahme **86** ausgebildet.

In der Werkzeugmaschinen-Aufnahme 84 ist eine als Handwerkzeugmaschine, beispielsweise als Bohrhammer, ausgebildete Werkzeugmaschine **88** angeordnet, für die Werkzeuge **90,** insbesondere Gesteinsbohrer, in der Werkzeug-Aufnahme 86 aufgenommen sind.

Denkbar ist ferner, dass, beispielsweise außenseitig des Gehäuses 12, eine Aufnahme für Verbrauchsmaterialien wie Schraubanker oder dergleichen ausgebildet ist, wobei die Verbrauchsmaterialien bevorzugt mit dem Endeffektor 24 oder einer daran befindlichen Verbrauchsmaterial-Greifvorrichtung zur weiteren Verarbeitung entnehmbar sein können.

### Bezugszeichenliste

- 10: Baustellenbox
- 12: Gehäuse
- 14: Fortbewegungsplattform
- 16: Manipulator
- 18: Kette
- 20: Motor
- 21: Energiespeicher
- 22: Hubvorrichtung
- 24: Endeffektor
- 26: Werkzeugmaschine
- 28: Saugleitung
- 29: Sprühdüse
- 30: Saugadapter
- 32: Druckluftschlauch
- 34: optisches Aufnahmegerät
- 36: Positionsmarke
- 38: Ladestandsanzeigeeinheit
- 39: Dockingstation
- 40: Not-Aus-Schalter
- 42: Tabletcomputer
- 44: Anzeigeeinheit
- 46: Mikrofon
- 48: Funkfernsteuerung
- 50: Positions- und Lageerkennungseinheit
- 52: Ladestation
- 54: Ladegerät
- 56: Akkumulator
- 57: Akkumulator-Aufnahme
- 58: Linienlaser-Aufnahme
- 60: Distanzmesser-Aufnahme
- 62: Seitenfach
- 64: Messutensilien-Aufnahme
- 66: Saugvorrichtung-Aufnahme
- 68: Saugvorrichtung
- 70: Kompressor
- 72: Farbbehälter
- 74: Verbrauchsmaterial-Aufnahme
- 76: Steuerraum
- 77: Gehäusedeckel
- 78: Rechnereinheit
- 80: Kommunikationsschnittstelle
- 82: Seitenfach
- 84: Werkzeugmaschinen-Aufnahme
- 86: Werkzeug-Aufnahme
- 88: Werkzeugmaschine
- 90: Werkzeug

## Patentansprüche

1. **Baustellenbox** (10) zur Bereitstellung von Werkzeugen (90), Werkzeugmaschinen (26, 88), Werkzeugmaschinenteilen und / oder Verbrauchsmaterialien auf einer Baustelle, insbesondere auf einer Hochbau- oder auf einer Tiefbaubaustelle, umfassend
- wenigstens eine Aufnahme (57, 58, 60, 64, 66, 74, 84, 86) zur Aufnahme eines Werkzeugs (90), einer Werkzeugmaschine (26, 88), eines Werkzeugmaschinenteils und / oder eines Verbrauchsmaterials,
- eine mobile Fortbewegungsplattform (14) zur Fortbewegung der Baustellenbox (10) und
- einen Motor (20) zum Antrieb der Fortbewegungsplattform (14).

2. Baustellenbox nach dem vorhergehenden Anspruch, **dadurch gekennzeichnet, dass** die Fortbewegungsplattform (14) als Kettenfahrwerk ausgebildet ist und / oder ein solches umfasst.

3. Baustellenbox nach einem der vorhergehenden Ansprüche, **dadurch gekennzeichnet, dass** die Fortbewegungsplattform (14) fernsteuerbar, teilautonom und / oder autonom fortbewegend ausgebildet ist.

4. Baustellenbox nach einem der vorhergehenden Ansprüche, **dadurch gekennzeichnet, dass** die Baustellenbox (10) wenigstens einen, insbesondere wiederaufladbaren, Energiespeicher (21) aufweist.

5. Baustellenbox nach einem der vorhergehenden Ansprüche, **dadurch gekennzeichnet, dass** die Baustellenbox (10) wenigstens eine Ladestation (52) zur Aufladung eines externen Energiespeichers aufweist.

6. Baustellenbox nach einem der vorhergehenden Ansprüche, **dadurch gekennzeichnet, dass** die Baustellenbox (10) wenigstens eine Rechnereinheit (78) und / oder eine Anzeigeeinheit (44) aufweist.

7. Baustellenbox nach einem der vorhergehenden Ansprüche, **dadurch gekennzeichnet, dass** die Baustellenbox (10) wenigstens eine drahtlose Kommunikationsschnittstelle (80) aufweist.

8. Baustellenbox nach einem der vorhergehenden Ansprüche, **dadurch gekennzeichnet, dass** die Baustellenbox (10) eingerichtet ist, BIM-Daten über die Kommunikationsschnittstelle (80) zu empfangen, zu speichern und / oder über die Kommunikationsschnittstelle (80) bereitzustellen.

9. Baustellenbox nach einem der vorhergehenden Ansprüche, **dadurch gekennzeichnet, dass** die Baustellenbox (10) wenigstens eine Positions- und / oder Lageerkennungseinheit (50) aufweist.

10. Baustellenbox nach einem der vorhergehenden Ansprüche, **dadurch gekennzeichnet, dass** die Baustellenbox (10) wenigstens einen steuerbaren Manipulator (16) aufweist.

11. Baustellenbox nach einem der vorhergehenden Ansprüche, **dadurch gekennzeichnet, dass** die Baustellenbox (10) wenigstens ein optisches Aufnahmegerät (34), beispielsweise eine Time-Of-Flight-Kamera, aufweist.

12. Baustellenbox nach einem der vorhergehenden Ansprüche, **dadurch gekennzeichnet, dass** die Baustellenbox (10) eine Saugvorrichtung (68) und / oder eine Ausblasvorrichtung aufweist.

13. Baustellenbox nach einem der vorhergehenden Ansprüche, **dadurch gekennzeichnet, dass** die Baustellenbox (10) wenigstens einen Kompressor (70), einen Farbbehälter (72) und / oder eine Sprühdüse (29) aufweist.

14. Baustellenbox nach einem der vorhergehenden Ansprüche, **dadurch gekennzeichnet, dass** die Baustellenbox (10), insbesondere die Fortbewegungsplattform (14) und / oder der Manipulator (16), durch wenigstens ein akustisches und / oder ein optisches Signal, beispielsweise ein Sprachkommando oder eine optisch detektierbare Geste eines Benutzers der Baustellenbox (10), steuerbar ist.
